# EUROPÄISCHE PATENTSCHRIFT

(11) **EP 2 390 975 B1**
(45) Veröffentlichungstag und Bekanntmachung des Hinweises auf die Patenterteilung: **17.10.2018**
(21) Anmeldenummer: 11166868.7
(22) Anmeldetag: 20.05.2011
(51) Int. Cl.: H01H 1/62, H01H 9/52, H02B 11/04

(54) **Kühlvorrichtung für eine elektrische Schaltanlage**
Cooling device for an electrical switchgear
Dispositif de refroidissement pour une installation de commutation électrique

(30) Priorität: 31.05.2010 DE 102010022087
(43) Veröffentlichungstag der Anmeldung: 30.11.2011
(73) Patentinhaber: SCHNEIDER ELECTRIC Sachsenwerk GmbH, 93055 Regensburg (DE)
(72) Erfinder: Dr.rer.nat. Summer, Raimund, 93186, Pettendorf (DE); Gassner, Anton, 93164, Frauenberg (DE)
(74) Vertreter: DREISS Patentanwälte PartG mbB

(56) Entgegenhaltungen:
- WO-A1-2006/092380
- DE-U1- 20 121 796
- US-A- 3 662 137
- US-A- 4 005 297
- US-A- 5 753 875
- US-A1- 2005 115 927

## Beschreibung

Die Erfindung betrifft eine Kühlvorrichtung für eine elektrische Schaltanlage insbesondere im Bereich der Mittel- oder Hochspannungstechnik nach dem Oberbegriff des Anspruchs 1.

Aus der US 4,005,297 ist ein Vakuum-Leistungsschalter bekannt, bei dem ein Kontaktstück innerhalb des Vakuumschalters mit einem Wärmerohr versehen ist. Mit Hilfe des Wärmerohrs wird also die an dem Kontaktstück entstehende Wärme aus dem Vakuumschalter heraus geführt.

Bei einem Wärmerohr befindet sich ein Arbeitsmedium in einem evakuierten, hermetisch abgeschlossenen Metallrohr. Wenn das Wärmerohr an seinem heißen Ende mit einem wärmeabgebenden Bauteil in Kontakt kommt, so verdampft das Arbeitsmedium und transportiert die Wärme zum kalten Ende des Wärmerohrs. Dort kondensiert das Arbeitsmedium und gibt die Wärme an das Wärmerohr und dessen Umgebung ab. Das kondensierte Arbeitsmedium fließt danach beispielsweise mit Hilfe der Gravitationskraft oder mittels Kapillarwirkungen im Wärmerohr wieder zurück zu dem heißen Ende des Wärmerohrs.

US 4 005 297 A offenbart eine Kühlvorrichtung für eine elektrische Schaltanlage, die eine Mehrzahl von Kühlplatten aufweist, die über ein Wärmerohr mit einem Kontakt eines Vakuumschalters verbunden sind.

US 2005/0115927 A1 offenbart einen Vakuumschalter mit drei Phasen. Des Weiteren ist ein ringförmiger Radiator offenbart, der sternförmig verlaufende Rippen aufweist. US 5 753 875 A offenbart eine Wärmesenke für einen Vakuumunterbrecher. Eine Wärmeabstrahlungseinrichtung ist an mindestens einem mehrerer Kontakte befestigt und erstreckt sich radial nach außen zwischen einer Vakuumröhre und einem Verbindungspunkt.

WO 2006/092380 A1 offenbart eine Vorrichtung zum Unterbrechen eines von einer Hochspannung getriebenen elektrischen Wechselstromes mit Kontaktstücken, die mit Leitern verbunden und in einem Kontaktgehäuse angeordnet sind. Ein Wärmerohr hat ein fluiddichtes Wärmerohrgehäuse, das einen Verdampfungsbereich, einen Kondensationsbereich und eine Kapillarstruktur aufweist, die sich zwischen dem Verdampfungsbereich und dem Kondensationsbereich erstreckt und mit diesen thermisch gekoppelt ist, wobei das Wärmerohrgehäuse ein Wärmetransportmittel aufweist und der Verdampfungsbereich Wärme-leitend mit einem der Leiter oder einem der Kontaktstücke verbunden ist.

Aufgabe der Erfindung ist es, die bekannte Kühlvorrichtung zu verbessern.

Die Erfindung löst diese Aufgabe durch eine Kühlvorrichtung für eine elektrische Schaltanlage nach dem Anspruch 1.

Die vorgeschlagene Kühlvorrichtung ist mit einem Rahmen versehen, der einen Bereich begrenzt, in dem eine Mehrzahl von Kühlplatten angeordnet sind, und die weiterhin mit mindestens einem Wärmerohr versehen ist, das einerseits mit einem wärmeabgebenden Teilbereich der Kühlvorrichtung und andererseits mit den Kühlplatten gekoppelt ist.

Die Wärme wird damit von dem wärmeabgebenden Teilbereich über das heiße Ende des Wärmerohrs zu dessen kaltem Ende und damit zu den Kühlplatten transportiert und über diese an die Umgebung abgegeben. Der wärmeabgebende Teilbereich kann dabei mit einem wärmeabgebenden Bauteil der Schaltanlage, beispielsweise einem elektrischen Pol oder einem elektrischen Leiter verbunden sein.

Die erfindungsgemäße Kühlvorrichtung kann eine hohe Wärmemenge abführen und weist gleichzeitig eine sehr kompakte und leichte Bauweise auf. Durch die Reduktion auf den Rahmen, die Kühlplatten und das Wärmerohr entsteht ebenfalls eine sehr einfach aufgebaute und damit leicht und kostengünstig herstellbare Kühlvorrichtung.

Die Anordnung der Kühlplatten innerhalb des von dem Rahmen begrenzten Bereichs bringt den Vorteil mit sich, dass die Kühlplatten mit Hilfe des Rahmens elektrisch abgeschirmt und auch mechanisch geschützt sind. Die erfindungsgemäße Kühlvorrichtung weist damit auch bei einer Verwendung im Bereich der Mittel- und Hochspannungstechnik eine hohe Spannungsfestigkeit auf.

Im Unterschied zum Stand der Technik wird das Wärmerohr erfindungsgemäß nicht zum Ableiten von Wärme beispielsweise von einem Kontaktstück eines Vakuumschalters verwendet, sondern zum Abführen der Wärme eines allgemein wärmeabgebenden Bauteils der Schaltanlage zu den Kühlplatten, von denen die Wärme dann an die Umgebung abgegeben wird.

Bei einer vorteilhaften Ausgestaltung der Erfindung ist der Teilbereich der Kühlvorrichtung mit mindestens einer Platte eines Trennschalters verbunden. Damit ist es auf einfache Weise möglich, die üblicherweise an einem Trennschalter entstehende Wärme über die erfindungsgemäße Kühlvorrichtung abzuführen.

Eine weitere, besonders vorteilhafte Ausgestaltung der Erfindung besteht darin, dass der Rahmen, der Teilbereich, die Kühlplatten, das Wärmerohr und das wärmeabgebende Bauteil der Schaltanlage als integriertes Bauteil ausgebildet sind. Dies führt zu einer besonders kompakten Bauweise für die erfindungsgemäße Kühlvorrichtung.

Weitere Merkmale, Anwendungsmöglichkeiten und Vorteile ergeben sich aus der nachfolgenden Beschreibung von Ausführungsbeispielen der Erfindung, die in den Figuren der Zeichnung dargestellt sind.

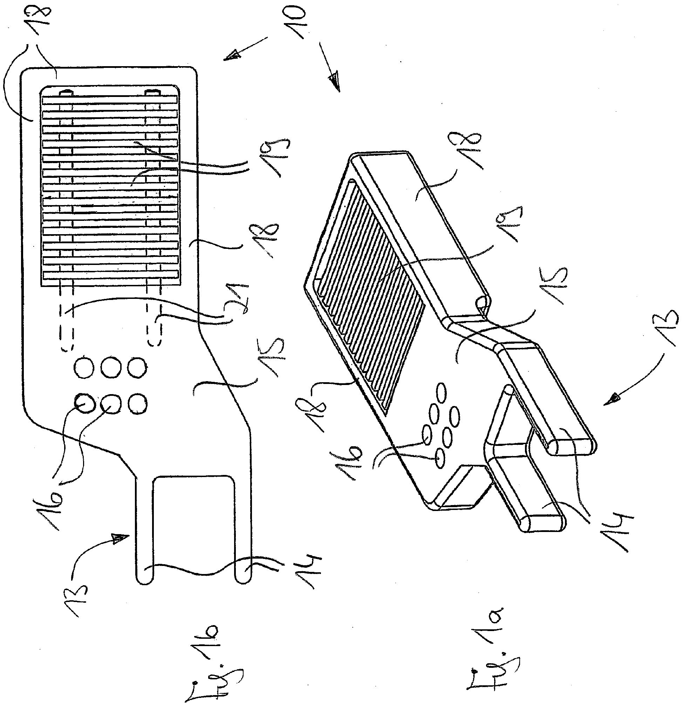

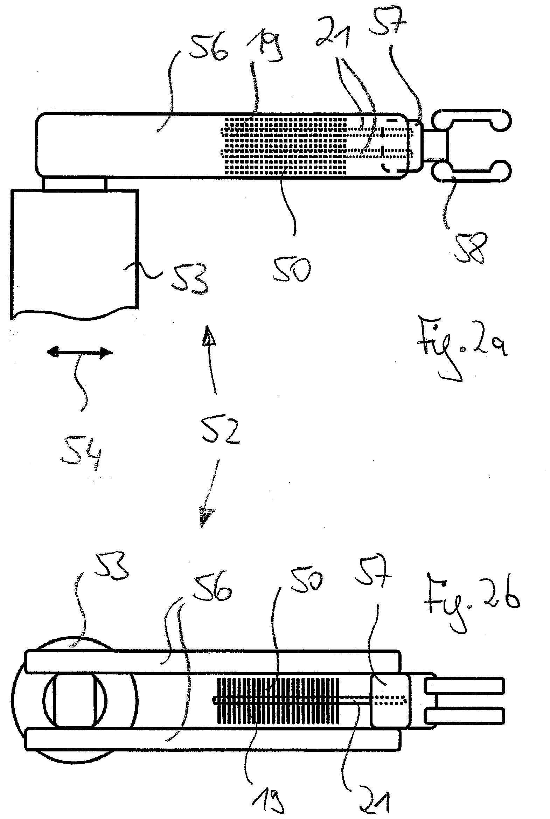

Figuren 1a, 1b zeigen eine schematische Perspektivdarstellung und eine Draufsicht eines Ausführungsbeispiels einer erfindungsgemässen Kühlvorrichtung, und Figuren 2a, 2b zeigen eine schematische Seiten- und Draufsicht eines Ausführungsbeispiels einer Kühlvorrichtung, das nicht Teil der Erfindung ist.

In den Figuren 1a, 1b ist eine Kühlvorrichtung 10 dargestellt, die zur Verwendung bei luft- oder gasisolierten elektrischen Schaltanlagen der Mittel- oder Hochspannungstechnik eingesetzt werden kann.

Beispielsweise bei einer gasisolierten Schaltanlage sind in einem mit Isoliergas gefüllten Gehäuse ein oder mehrere elektrische Schalter untergebracht, die zur Unterbrechung eines hohen Stroms ausgebildet sind. So ist in den Figuren 1a, 1b beispielhaft ein Pol 13 eines Trennschalters. Dieser Pol 13 weist dabei beispielhaft zwei scheibenartige Platten 14 auf, die mit einem Abstand und etwa parallel zueinander angeordnet sind. Der andere Pol des Trennschalters ist in der Figur 1 nicht dargestellt. Bei diesem anderen Pol kann es sich beispielsweise um ein schwenkbares Schaltmesser handeln, das entweder zwischen die beiden Platten 14 geschwenkt oder von den beiden Platten 14 getrennt werden kann. In den Figuren 1a, 1b ist der getrennte Zustand gezeigt, in dem sich der Trennschalter somit in seinem den Strom unterbrechenden Zustand befindet.

In den Figuren 1a, 1b kann der Trennschalter beispielhaft mit einem Pol eines Vakuumschalters verbunden sein. Dieser Vakuumschalter kann in nicht-dargestellter Weise zum Beispiel unterhalb der Kühlvorrichtung 10 angeordnet sein, also in der Perspektivdarstellung der Figur 1b insbesondere etwa unterhalb der noch zu erläuternden Bohrungen 16 der Kühlvorrichtung 10.

Die beiden Platten 14 des Trennschalters sind mit Hilfe eines plattenartigen Teilbereichs 15 der Kühlvorrichtung 10 miteinander verbunden. Der Teilbereich 15 geht dabei von dem Abstand zwischen den beiden Platten 14 aus und weitet sich von dort in Richtung zu dem noch zu erläuternden Rahmen 18 zu einem größeren Abstand auf. Der Teilbereich 15 weist mehrere Bohrungen 16 auf, über die der Trennschalter 13 in irgend einer nicht näher gezeigten Weise beispielsweise an dem Vakuumschalter befestigt sein kann. Insoweit handelt es sich bei dem Teilbereich 15 um ein stromtragendes Leiterelement im Strompfad von dem Vakuumschalter zu dem Trennschalter.

In der Figuren 1a, 1b sind die Platten 14 und der Teilbereich 15 in beispielhafter Weise einstückig ausgebildet und bestehen aus einem elektrisch und thermisch leitfähigen Material. Es versteht sich, dass diese Anordnung auch mehrteilig ausgebildet sein kann.

Im vorliegenden Ausführungsbeispiel ist ein etwa U-förmiger Rahmen 18 mit dem Teilbereich 15 und damit mit den beiden Platten 14 verbunden. Hierzu stehen die freien Enden der beiden Schenkel des Rahmens 18 etwa in derselben Ebene wie die Platten 14 von dem Teilbereich 15 ab.

Der Rahmen 18 besteht aus einem elektrisch leitfähigen Material und ist beispielhaft einstückig mit dem Teilbereich 15 und den Platten 14 ausgebildet. Insoweit handelt es sich bei dem Ausführungsbeispiel der Figuren 1a, 1b um ein integriertes Bauteil. Alternativ ist es möglich, dass der Rahmen 18, der Teilbereich 15 und die Platten 14 mehrteilig ausgebildet sind und jeweils aus einem elektrisch leitfähigen Material bestehen.

In dem von dem U-förmigen Rahmen 18 umschlossenen Bereich sind eine Mehrzahl von Kühlplatten 19 angeordnet. Die Kühlplatten 19 bestehen aus einem elektrisch und thermisch leitfähigen Material. Weiterhin weisen die Kühlplatten 19 alle dieselbe Flächenform auf, sind mit Abstand und etwa parallel zueinander angeordnet und etwa eben ausgebildet.

Im vorliegenden Ausführungsbeispiel sind die Kühlplatten 19 etwa parallel zum Verbindungssteg des U-förmigen Rahmens 18 ausgerichtet. Wenn man diesem Verbindungssteg eine Länge zuordnet, so besitzt die Flächenform der Kühlplatten 19 etwa dieselbe Länge. Wenn man dem Rahmen 18 eine etwa quer zu der Richtung des Verbindungsstegs verlaufende Breite zuordnet, so besitzt die Flächenform der Kühlplatten 19 etwa dieselbe Breite.

Es versteht sich, dass die Flächenform der Kühlplatten 19 auch andersartig ausgebildet sein kann. Ebenfalls ist es möglich, dass die Kühlplatten 19 nicht eben sind, sondern eine Form aufweisen, beispielsweise mit Ausbauchungen oder Öffnungen versehen sind. Schließlich ist es auch möglich, dass die Kühlplatten 19 ersetzt sind durch eine Vielzahl von Kühlstiften, die beispielsweise von einem flächigen Basisteil abstehen, das sich innerhalb des von dem U-förmigen Rahmen 18 umschlossenen Bereichs befindet.

Der von dem U-förmigen Rahmen 18 und dem Teilbereich 15 umschlossene und damit begrenzte Bereich kann, wie in den Figuren 1a, 1b gezeigt, vollständig oder nur teilweise mit den Kühlplatten 19 ausgefüllt sein.

Der Rahmen 18 dient der elektrischen Schirmung der Kühlplatten 19. Der Rahmen 18 vermeidet somit, dass kleine Radien oder sonstige Kanten der Kühlplatten 19 zu elektrischen Entladungen führen. Weiterhin stellt der Rahmen 18 einen Schutz der Kühlplatten 19 gegen mechanische Beschädigungen dar.

In den Kühlplatten 19 sind Öffnungen enthalten, durch die im vorliegenden Ausführungsbeispiel zwei Wärmerohre 21 hindurch gesteckt sind. Die Wärmerohre 21 sind derart mit den Kühlplatten 19 verbunden, beispielsweise verlötet oder eingepresst oder aufgeweitet, dass ein möglichst guter thermischer Übergang vorhanden ist. Die Wärmerohre 21 sind gerade ausgebildet und erstrecken sich etwa quer zur Ausrichtung der Kühlplatten 19.

In dem Teilbereich 15 sind ebenfalls Öffnungen enthalten, in die die beiden Wärmerohre 21 hinein gesteckt und beispielsweise verlötet sind. Die Wärmerohre 21 und die zugehörigen Öffnungen in dem Teilbereich 15 sind derart aneinander angepasst, dass eine Form- oder Presspassung und damit ein möglichst guter thermischer Übergang vorhanden ist. Die Wärmerohre 21 sind damit einseitig mit dem Teilbereich 15 verbunden, weisen ansonsten aber keine Verbindung mit dem Rahmen 18 auf.

Alternativ ist es möglich, dass das Teilbereich 15 derart zweiteilig ausgebildet ist, dass die Wärmerohre 21 dazwischen hinein gelegt und dann durch Verschrauben eingepresst werden können.

Die beiden Wärmerohre 21 weisen einen Abstand auf und sind etwa parallel zueinander ausgerichtet. Es versteht sich, dass auch nur ein Wärmerohr 21 oder mehr als zwei Wärmerohre 21 vorhanden sein können. Die Wärmerohre 21 bestehen aus einem elektrisch leitfähigen Material.

Bei den Wärmerohren 21 handelt es sich jeweils um eine sogenannte "heat pipe". In jedem der dicht gekapselten Wärmerohre 21 ist ein Arbeitsmedium, beispielsweise Wasser, enthalten, das das jeweilige Wärmerohr 21 in flüssigem und/oder dampfförmigem Zustand ausfüllt. Jedes der Wärmerohre 21 weist eine Wärmeübertragungsfläche für eine Wärmequelle und eine Wärmeübertragungsfläche für eine Wärmesenke auf. Findet in der Wärmeübertragungsfläche für die Wärmequelle eine Erwärmung durch die Wärmequelle statt, so beginnt das Arbeitsmedium zu verdampfen. Dadurch wird der Druck im Wärmerohr 21 erhöht, was zu einem Druckgefälle innerhalb des Wärmerohrs 21 führt. Der entstandene Dampf strömt damit in Richtung zu der Wärmeübertragungsfläche für die Wärmesenke, wo er wegen der dortigen niedrigeren Temperatur kondensiert. Die zuvor von der Wärmequelle abgegebene und von dem Arbeitsmedium aufgenommene Wärme wird an die Wärmeübertragungsfläche für die Wärmesenke und damit an das Wärmerohr 21 abgegeben. Das nun flüssige Arbeitsmedium kehrt durch Kapillarkraft bzw. Kapillarwirkungen des jeweiligen Wärmerohrs 21 wieder zurück zur Wärmeübertragungsfläche für die Wärmequelle. Dort beginnt der beschriebene Ablauf von vorne.

Im vorliegenden Ausführungsbeispiel stellt der Teilbereich 15 die Wärmequelle und die Kühlplatten 19 die Wärmesenke dar. Weiterhin stellen die in dem Teilbereich 15 eingesteckten freien Enden der Wärmerohre 21 die Wärmeübertragungsflächen für die Wärmequelle und die durch die Kühlplatten 19 hindurch gesteckten freien Enden der Wärmerohre 21 die Wärmeübertragungsflächen für die Wärmesenke dar.

Im Betrieb der Schaltanlage stellen der Pol 13 des Trennschalters und der Pol des Vakuumschalters jeweils einen sogenannten Heißpunkt dar. Wie erläutert wurde, sind diese beiden Bauteile über den Teilbereich 15 miteinander verbunden. Insoweit bildet der Teilbereich 15 ein wärmeabgebendes Bauteil. Wärme, die sich im Betrieb der Schaltanlage beispielsweise im Bereich der beiden Platten 14 des Trennschalters bildet, wird somit über den Teilbereich 15 an das wärmeaufnehmende Ende der beiden Wärmerohre 21 abgeben. Dann wird die Wärme mit Hilfe des Arbeitsmediums in Richtung zu dem anderen, wärmeabgebenden Ende der beiden Wärmerohre 21 transportiert. Dort wird die Wärme an die Kühlplatten 19 abgegeben. Die Wärme verteilt sich auf die Oberflächen der Kühlplatten 19 und wird von dort an die Umgebung abgegeben. Das kondensierte Arbeitsmedium kehrt wieder zu den dem Teilbereich 15 zugeordneten freien Enden der Wärmerohre 21 zurück.

Aufgrund der Verwendung der Wärmerohre 21 wird ein hoher Wärmefluss von dem Teilbereich 15 zu den Kühlplatten 19 erreicht. Bei der Übertragung der Wärme von dem Teilbereich 15 in Richtung zu den Kühlplatten 19 und auf die Kühlplatten 19 findet somit im wesentlichen nur ein geringer Temperaturabfall statt, so dass der vorgenannte Heißpunkt über den Teilbereich 15 nahezu optimal gekühlt werden kann.

Die Kühlvorrichtung 10 setzt sich im Ausführungsbeispiel der Figuren 1a, 1b insbesondere aus den Platten 14, dem Teilbereich 15, dem Rahmen 18, den Kühlplatten 19 und den Wärmerohren 21 zusammen. Diese Bauteile liegen alle elektrisch auf demselben Potential, und zwar immer auf dem Potential der Mittel- oder Hochspannung der Schaltanlage. Es fließt somit kein Strom über den Rahmen 18, die Kühlplatten 19 oder die Wärmerohre 21. Der Strom wird nur über die Platten 14 und den Teilbereich 15 von dem Trennschalter zu dem Vakuumschalter geführt und nur die dort vorhandene Wärme wird über die Kühlvorrichtung 10 abgeführt.

Die Anzahl, die Flächenform und der Abstand der Kühlplatten 19 sowie die Anzahl, die Länge und der Abstand der Wärmerohre 21 sind veränderlich. Diese Parameter können für die jeweils vorliegende Schaltanlage in Abhängigkeit von der abzuführenden Wärme verändert bzw. entsprechend gewählt werden. Die in den Figuren 1a, 1b dargestellte Kühlvorrichtung 10 kann gegebenenfalls nachträglich in eine bestehende Schaltanlage eingebaut werden. Ebenfalls ist es möglich, dass innerhalb einer Schaltanlage mehrere derartige Kühlvorrichtungen 10 an unterschiedlichen Stellen angeordnet sind.

Weiterhin kann die beschriebene Kühlvorrichtung 10 auch unabhängig von dem genannten Vakuumschalter zur Anwendung kommen, also nur im Zusammenhang mit dem Pol 13 des genannten Trennschalters. Die Kühlvorrichtung 10 dient in diesem Fall zur Kühlung des Pols 13. Im letztgenannten Fall kann die Kühlvorrichtung 10 mittels der Bohrungen 16 innerhalb der Schaltanlage derart befestigt werden, dass mit der Montage automatisch auch der von den Platten 14 gebildete Pol 13 korrekt innerhalb der Schaltanlage angeordnet ist.

Schließlich ist es möglich, dass die Kühlvorrichtung der Figuren 1a, 1b auch nur zur Kühlung eines elektrischen Leiters eingesetzt wird, der beispielsweise zu dem von den Platten 14 gebildeten Pol 13 führt. In diesem Fall wird die Kühlvorrichtung 10 also weitgehend unabhängig von dem genannten Trennschalter, wie auch unabhängig von dem erwähnten Vakuumschalter eingesetzt.

In den Figuren 2a, 2b ist eine Kühlvorrichtung 50 dargestellt, die hinsichtlich ihres grundsätzlichen Aufbaus weitgehend der Kühlvorrichtung 10 der Figuren 1a, 1b entspricht. Gleichartige Merkmale der Kühlvorrichtung 50 sind deshalb in den Figuren 2a, 2b mit denselben Bezugszeichen gekennzeichnet wie in den Figuren 1a, 1b. Hinsichtlich dieser gleichartigen Merkmale wird insoweit auf die Erläuterungen zu den Figuren 1a, 1b verwiesen. Nachfolgend sind im wesentlichen diejenigen Merkmale der Kühlvorrichtung 50 der Figuren 2a, 2b beschrieben, die von der Kühlvorrichtung 10 der Figuren 1a, 1b abweichen.

Die Kühlvorrichtung 50 ist in einen Trennkontakt 52 eines fahrbaren Leistungsschalterwagens einer luftisolierten Schaltanlage integriert. Der Trennkontakt 52 ist dabei über eine Säule 53 in nicht näher dargestellter Weise mit dem Leistungsschalterwagen mechanisch verbunden und kann daher zusammen mit dem Leistungsschalterwagen in die mit dem Doppelpfeil 54 gekennzeichnete Richtungen hin- und her bewegt werden.

Der Trennkontakt 52 ist aus zwei Leisten 56 aufgebaut, die parallel nebeneinander angeordnet sind. An ihrem einen freien Ende sind die Leisten 56 in nicht näher beschriebener Weise mit der Säule 53 verbunden und an ihrem anderen freien Ende sind die Leisten 56 über ein Verbindungsteil 57 miteinander verbunden. Das Verbindungsteil 57 bildet dabei im Vergleich mit den Figuren 1a, 1b den dortigen Teilbereich 15.

An dem Verbindungsteil 57 sind Backen 58 gehalten, die in Richtung der Leisten 56 abstehen, und über die eine elektrische Verbindung mit bzw. eine Trennung von einem anderen, nicht dargestellten elektrischen Leiter der Schaltanlage vornehmbar ist.

Zwischen den beiden Leisten 56 ist die Kühlvorrichtung 50 angeordnet. Die Kühlvorrichtung weist eine Mehrzahl von Kühlplatten 19 sowie zwei Wärmerohre 21 auf, die thermisch mit dem Verbindungsteil 57 gekoppelt sind. Im Vergleich zur Figur 1 bilden die beiden Leisten 56 der Figuren 3a, 3b einen Rahmen für die Kühlplatten 19. Die Wärmerohre 21 sind damit einseitig in dem Verbindungsteil 57 gehalten, weisen aber keine sonstige Verbindung zu den Leisten 56 auf.

Die Backen 58 stellen einen Heißpunkt des Trennkontakts 52 dar. Die dort vorhandene Wärme wird über das Verbindungsteil 57 und die Wärmerohre 21 auf die Kühlplatten 19 übertragen und dort an die Umgebung abgegeben.

## Patentansprüche

1. Kühlvorrichtung (10) für eine elektrische Schaltanlage im Bereich der Mittel- oder Hochspannungstechnik, mit mindestens einem Wärmerohr (21), das einerseits mit einem wärmeabgebenden Teilbereich (15) der Kühlvorrichtung (10) und andererseits mit einer Mehrzahl von Kühlplatten (19) gekoppelt ist, wobei der Teilbereich (15) mit einem wärmeabgebenden Bauteil der Schaltanlage verbindbar ist, **dadurch gekennzeichnet,**
- **dass** die Kühlvorrichtung (10) einen Rahmen (18) umfasst, der einen Bereich begrenzt, in dem die Mehrzahl von Kühlplatten (19) angeordnet sind,
- **dass** der Rahmen (18), der Teilbereich (15), die Kühlplatten (19) und das Wärmerohr (21) als integriertes, separates Bauteil ausgebildet sind,
- **dass** der Rahmen (18) etwa U-förmig ausgebildet ist, und
- **dass** der Teilbereich (15) die freien Enden der beiden Schenkel des Rahmens (18) verbindet.

2. Kühlvorrichtung (10) nach Anspruch 1, wobei das Wärmerohr (21) in den wärmeabgebenden Teilbereich (15) eingesteckt und durch Öffnungen der Kühlplatten (19) hindurch gesteckt ist.

3. Kühlvorrichtung (10) nach Anspruch 1, wobei die Kühlplatten (19) etwa quer zu den Schenkeln bzw. Leisten des Rahmens (18) ausgerichtet sind, und wobei das Wärmerohr (21) etwa parallel zu den Schenkeln bzw. Leisten des Rahmens (18) ausgerichtet ist.

4. Kühlvorrichtung (10) nach einem der Ansprüche 1 bis 3, wobei die Kühlplatten (19) mit dem Wärmerohr (21) verlötet und/oder verpresst bzw. aufgepresst und/oder durch Aufweiten verbunden sind.

5. Kühlvorrichtung (10) nach einem der Ansprüche 1 bis 4, wobei das Wärmerohr (21) mittels einer Form- oder Presspassung mit dem Teilbereich (15) verbunden ist.

6. Kühlvorrichtung (10) nach einem der Ansprüche 1 bis 5 mit einem stromführenden Schalter, wobei der Teilbereich (15) mit einem Pol (13) des stromführenden Schalters der Schaltanlage verbunden ist.

7. Kühlvorrichtung (10) nach einem der Ansprüche 1 bis 6, wobei der Teilbereich (15) mit mindestens einer Platte (14) eines Trennschalters verbunden ist.

8. Elektrische Schaltanlage für den Bereich der Mittel- oder Hochspannungstechnik, mit einer Kühlvorrichtung (10) nach einem der vorstehenden Ansprüche.

## Claims

1. Cooling device (10) for an electrical switchgear in the field of medium or high voltage applications having at least one heating pipe (21) which is coupled, on the one hand, with a heat-emitting partial region (15) of the cooling device (10) and on the other hand with a plurality of cooling plates (19), wherein the partial region (15) can be connected with a heat-emitting component of the switchgear, **characterised in that**
- the cooling device (10) comprises a frame (18) which delimits a region in which the plurality of cooling plates (19) are arranged,
- the frame (18), the partial region (15), the cooling plates (19) and the heating pipe (21) are designed in the form of an integrated, separate component,
- the frame (18) is roughly U-shaped in form, and
- the partial region (15) connects the free ends of the two arms of the frame (18).

2. Cooling device (10) according to claim 1, wherein the heating pipe (21) is inserted in the heat-emitting partial region (15) and plugged through openings in the cooling plates (19).

3. Cooling device (10) according to claim 1, wherein the cooling plates (19) are oriented roughly transversely to the arms or rails of the frame (18), and wherein the heating pipe (21) is oriented roughly parallel to the arms or rails of the frame (18).

4. Cooling device (10) according to one of the claims 1 to 3, wherein the cooling plates (19) are soldered and/or pressed onto the heating pipe (21) and/or connected therewith through expansion.

5. Cooling device (10) according to one of the claims 1 to 4, wherein the heating pipe (21) is connected with the partial region (15) by means of a form fit or press fit.

6. Cooling device (10) according to one of the claims 1 to 5 with a current-carrying switch, wherein the partial region (15) is connected with a pole (13) of the current-carrying switch of the switchgear.

7. Cooling device (10) according to one of the claims 1 to 6, wherein the partial region (15) is connected with at least one plate (14) of a circuit breaker.

8. Electrical switchgear for the field of medium or high voltage applications, with a cooling device (10) according to one of the preceding claims.

## Revendications

1. Dispositif de refroidissement (10) pour un système de commutation électrique dans le domaine de l'ingénierie à moyenne ou haute tension, avec au moins un tube caloporteur (21) couplé d'une part avec une partie émettrice de chaleur (15) du dispositif de refroidissement (10) et d'autre part avec une pluralité de plaques de refroidissement (19), dans lequel la partie (15) peut être reliée à un composant émettant de la chaleur du système de commutation, **caractérisé en ce que**
- le dispositif de refroidissement (10) comprend un cadre (18) qui délimite une zone dans laquelle sont agencées la pluralité de plaques de refroidissement (19),
- le cadre (18), la partie (15), les plaques de refroidissement (19) et le tube caloporteur (21) forment un composant intégré et séparé,
- le cadre (18) est formé approximativement en forme de U, et
- la partie (15) relie les extrémités libres des deux branches du cadre (18).

2. Dispositif de refroidissement (10) selon la revendication 1, dans lequel le tube caloporteur (21) est inséré et introduit dans la partie émettrice de chaleur (15) à travers des ouvertures des plaques de refroidissement (19) .

3. Dispositif de refroidissement (10) selon la revendication 1, dans lequel les plaques de refroidissement (19) sont alignées approximativement transversalement aux branches ou barres du cadre (18), et dans lequel le tube caloporteur (21) est orientés sensiblement parallèle aux branches ou barres du cadre (18).

4. Dispositif de refroidissement (10) selon l'une quelconque des revendications 1 à 3, dans lequel les plaques de refroidissement (19) sont brasées et/ou pressées ou emmanchées et/ou reliées par expansion avec le tube caloporteur (21).

5. Dispositif de refroidissement (10) selon l'une quelconque des revendications 1 à 4, dans lequel le tube caloporteur (21) est relié à la partie (15) au moyen d'un ajustement de forme ou serré.

6. Dispositif de refroidissement (10) selon l'une quelconque des revendications 1 à 5 avec un commutateur conducteur de courant, dans lequel la partie (15) est connectée à un pôle (13) du commutateur conducteur de courant du système de commutation.

7. Dispositif de refroidissement (10) selon l'une quelconque des revendications 1 à 6, dans lequel la partie (15) est reliée à au moins une plaque (14) d'un disjoncteur.

8. Système de commutation électrique pour le domaine de l'ingénierie à moyenne ou haute tension, comprenant un dispositif de refroidissement (10) selon l'une quelconque des revendications précédentes.
